# EUROPEAN PATENT SPECIFICATION

(11) **EP 3 117 752 B1**
(45) Date of publication and mention of the grant of the patent: **07.09.2022**
(21) Application number: 14885432.6
(22) Date of filing: 12.05.2014
(51) Int. Cl.: A47L 9/28, B25J 13/08, G05D 1/02

(54) **ROBOT VACUUM CLEANER AND METHOD FOR CONTROLLING SAME**
ROBOTISCHER STAUBSAUGER UND VERFAHREN ZUR STEUERUNG DAVON
ROBOT ASPIRATEUR ET SON PROCÉDÉ DE COMMANDE

(30) Priority: 11.03.2014 KR 20140028588
(43) Date of publication of application: 18.01.2017
(73) Proprietor: Everybot Inc., Gyeonggi-do 461-831 (KR)
(72) Inventor: JEONG, Hyun Gu, Bucheon-si Gyeonggi-do 422-717 (KR)
(74) Representative: Ziebig & Hengelhaupt Patent- und Rechtsanwaltskanzlei PartG mbB
(86) International application number: PCT/KR2014/004235
(87) International publication number: WO 2015/137560

(56) References cited:
- EP-A1- 2 065 774
- EP-A2- 2 583 608
- KR-A- 20060 105 830
- KR-A- 20120 009 927
- KR-A- 20120 009 927
- KR-A- 20130 002 218
- KR-B1- 101 000 178

## Description

### BACKGROUND OF THE INVENTION

### 1. Field of the Invention

The present invention relates to a robot cleaner and a method for controlling the same, and more particularly, to a robot cleaner capable of performing dustcloth cleaning while being autonomously moved, and a method for controlling the same.

### 2. Description of the Related Art

In accordance with the development of an industrial technology, various apparatuses have been automated. As well known, a robot cleaner has been utilized as a device automatically cleaning a target zone to be cleaned by sucking foreign materials such as dust, and the like, from a surface to be cleaned or wiping the foreign materials on the surface to be cleaned while being spontaneously traveled within the target zone to be cleaned without being manipulated by a user.

Generally, the robot cleaner may include a vacuum cleaner performing cleaning using suction force by a power source such as electricity, or the like.

The robot cleaner including the vacuum cleaner as described above does not remove foreign materials, an ingrained stain, and the like, stuck to the surface to be cleaned. Therefore, recently, a robot cleaner capable of performing damp cloth mopping or dustcloth cleaning by including a dustcloth attached thereto has emerged.

However, a dustcloth cleaning scheme using a general robot cleaner is only a simple scheme of attaching the dustcloth, or the like, to a lower portion of an existing robot cleaner for vacuum cleaning, such that a foreign material removal effect is low and dustcloth cleaning is not efficiently performed.

Particularly, in the case of the dustcloth cleaning scheme using the general robot cleaner, the general robot cleaner is traveled using a moving scheme, an obstacle avoiding scheme, and the like, for an existing suction type vacuum cleaner. Therefore, even though dust, and the like, scattered on the surface to be cleaned is removed, foreign materials, and the like, stuck to the surface to be cleaned may not be easily removed.

In addition, in the case of the dustcloth attachment structure of the general robot cleaner, a frictional force between the general robot cleaner and the ground is increased due to a dustcloth surface, such that a separate thrust for moving a wheel is further required. Therefore, battery consumption is increased.

EP 2583608 A and KR 1020120009927 A are relevant prior art.

### SUMMARY OF THE INVENTION

An object of the present invention is to provide a robot cleaner including a pair of rotation members to which dustcloth may be attached so as to effectively remove foreign materials, or the like, stuck to a surface to be cleaned, that may improve battery efficiency using torques of the rotation members as a power source of movement and may perform a rotation control for accomplishing effective dustcloth cleaning depending on a proceeding route and obstacle detection, and a method for controlling the same.

According to an exemplary embodiment of the present invention, a method for controlling a robot cleaner including a first rotation member and a second rotation member each rotating around a first shaft and a second shaft and having cleaners fixed thereto, comprising:
a step of controlling traveling of the robot cleaner by rotating the first rotation member and the second rotation member depending on a traveling mode;
a step of identifying whether or not an obstacle is detected during traveling of the robot cleaner; and
a step of rotating at least one of the first rotation member and the second rotation member depending on whether or not the obstacle is detected.

According to another exemplary embodiment of the present invention, a robot cleaner includes: a body unit ;
a driving unit provided in the body unit and supplying power for traveling the robot cleaner;
a first rotation member and a second rotation member each rotating around a first shaft and a second shaft by the power of the driving unit to provide a power source of movement for traveling the robot cleaner and each having cleaners fixed thereto; and
a control unit controlling traveling of the robot cleaner by rotating the first rotation member and the second rotation member depending on a traveling mode of the robot cleaner, identifying whether or not an obstacle is detected during traveling of the robot cleaner, and controlling rotation of at least one of the first rotation member and the second rotation member depending on whether or not the obstacle is detected.

Meanwhile, the method for controlling a robot cleaner may be implemented by a computer-readable recording medium in which a program that is to be executed in a computer is recorded.

According to an exemplary embodiment of the present invention, the robot cleaner may move while effectively removing the foreign materials, and the like, stuck to the surface to be cleaned using the torques of the pair of rotation members to which the dustcloth may be attached as the power source of the movement.

In addition, the battery efficiency may be improved using the torques of the rotation members as the power source of the movement, and the rotation control for accomplishing effective dustcloth cleaning may be performed depending on the proceeding route and the obstacle detection.

Meanwhile, according to an exemplary embodiment of the present invention, the number of sensors of the robot cleaner moving using the torques of the pair of rotation members as the power source of the movement may be minimized, and the obstacle detection performance may be improved. Therefore, a problem that the robot cleaner is caught and does not proceed by the obstacle at the time of being moved may be solved, and a manufacturing cost required for attaching the sensors may be reduced.

### BRIEF DESCRIPTION OF THE DRAWINGS

FIG. 1 is a view schematically illustrating an appearance of a robot cleaner according to an exemplary embodiment of the present invention.
FIG. 2 is a bottom view illustrating a first rotation member and a second rotation member of the robot cleaner according to an exemplary embodiment of the present invention.
FIG. 3 is a side view for describing positions of sensors of the robot cleaner according to an exemplary embodiment of the present invention.
FIG. 4 is a block diagram illustrating components of a system for controlling a robot cleaner according to an exemplary embodiment of the present invention.
FIG. 5 is a flow chart illustrating a method for controlling a robot cleaner according to an exemplary embodiment of the present invention.
FIG. 6 is a flow chart illustrating a method for controlling a robot cleaner according to another exemplary embodiment of the present invention.
FIGS. 7 and 8 are views for describing a first advance mode of a robot cleaner according to an exemplary embodiment of the present invention.
FIGS. 9 and 10 are views for describing a second advance mode of a robot cleaner according to an exemplary embodiment of the present invention.

### DETAILED DESCRIPTION

The following description illustrates only a principle of the present invention. Therefore, those skilled in the art may implement the principle of the present invention and invent various apparatuses included in the spirit and scope of the present invention although not clearly described or illustrated in the present specification. In addition, it is to be understood that all conditional terms and exemplary embodiments mentioned in the present specification are obviously intended only to allow those skilled in the art to understand a concept of the present invention in principle, and the present invention is not limited to exemplary embodiments and states particularly mentioned as such.

Further, it is to be understood that all detailed descriptions mentioning specific exemplary embodiments of the present invention as well as principles, aspects, and exemplary embodiments of the present invention are intended to include structural and functional equivalences thereof. Further, it is to be understood that these equivalences include an equivalence that will be developed in the future as well as an equivalence that is currently well-known, that is, all devices invented so as to perform the same function regardless of a structure.

Therefore, it is to be understood that, for example, block diagrams of the present specification illustrate a conceptual aspect of an illustrative circuit for embodying a principle of the present invention. Similarly, it is to be understood that all flow charts, state transition diagrams, pseudo-codes, and the like, illustrate various processes that may be tangibly embodied in a computer-readable medium and that are executed by computers or processors regardless of whether or not the computers or the processors are clearly illustrated.

Functions of various devices including processors or functional blocks represented as concepts similar to the processors and shown in the accompanying drawings may be provided using hardware having capability to execute appropriate software as well as dedicated hardware. When the functions are provided by the processors, they may be provided by a single dedicated processor, a single shared processor, or a plurality of individual processors, and some of them may be shared.

In addition, terms mentioned as a processor, a control, or a concept similar to the processor or the control should not be interpreted to exclusively cite hardware having capability to execute software, but should be interpreted to implicitly include digital signal processor (DSP) hardware and a read only memory (ROM), a random access memory (RAM), and a non-volatile memory for storing software without being limited thereto. The above-mentioned terms may also include well-known other hardware.

In the claims of the present specification, components represented as means for performing functions mentioned in a detailed description are intended to include all methods of performing functions including all types of software including, for example, a combination of circuit devices performing these functions, firmware/micro codes, or the like, and are coupled to appropriate circuits for executing the software so as to execute these functions. It is to be understood that since functions provided by variously mentioned means are combined with each other and are combined with a scheme demanded by the claims in the present invention defined by the claims, any means capable of providing these functions are equivalent to means recognized from the present specification.

The above-mentioned objects, features, and advantages will become more obvious from the following detailed description associated with the accompanying drawings. Therefore, those skilled in the art to which the present invention pertains may easily practice a technical idea of the present invention. Further, in describing the present invention, in the case in which it is decided that a detailed description of a well-known technology associated with the present invention may unnecessarily make the gist of the present invention unclear, it will be omitted.

Hereinafter, various exemplary embodiments of the present invention will be described in detail with reference to the accompanying drawings.

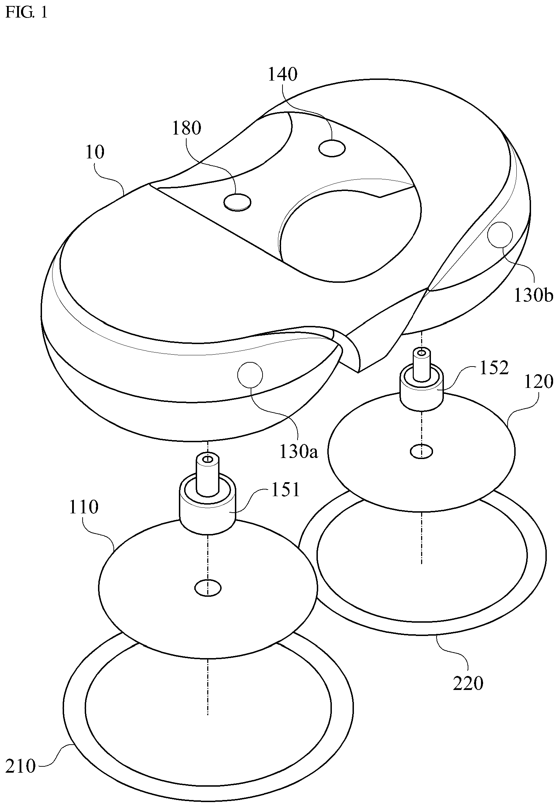

FIGS. 1 to 3 are views for describing a physical configuration of a robot cleaner according to an exemplary embodiment of the present invention.

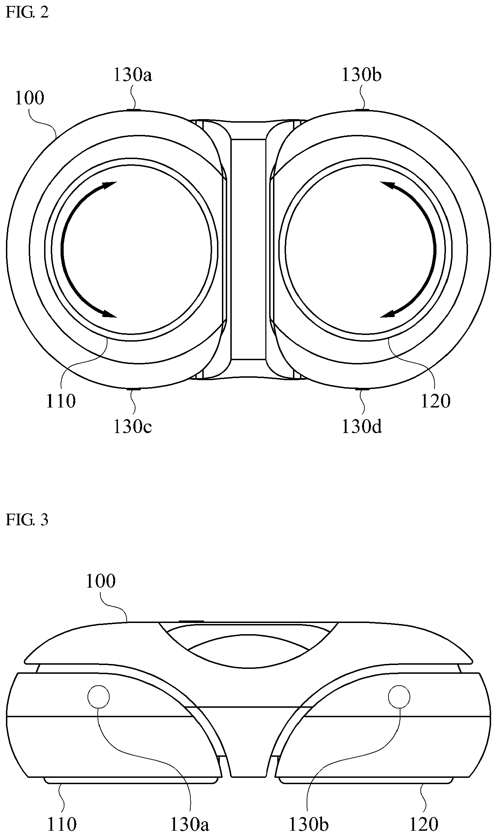

In more detail, FIG. 1 is an exploded perspective view schematically illustrating a structure of a robot cleaner according to an exemplary embodiment of the present invention, FIG. 2 is a bottom view for describing a first rotation member and a second rotation member of the robot cleaner according to an exemplary embodiment of the present invention, and FIG. 3 is a side view for describing positions of sensors of the robot cleaner according to an exemplary embodiment of the present invention.

Referring to FIGS. 1 to 3, the robot cleaner 100 according to an exemplary embodiment of the present invention may be structurally configured to include a body 10, a first shaft 151 and a second shaft 152 coupled to a driving unit fixed to an inner portion of the body 10 and each formed toward a surface to be cleaned, a first rotation member 110 coupled to the first shaft 151 to thereby rotate, a second rotation member 120 coupled to the second shaft 152 to thereby rotate, one or more sensors 130a, 130b, ..., provided on side surfaces and a central surface of the body 10, and an input unit 180 and a communication unit 140 provided on an upper end of the body 10.

Here, a first circular cleaner 210 and a second circular cleaner 220 may be each coupled to the first rotation member 110 and the second rotation member 120 each coupled to the first shaft 151 and the second shaft 152 to thereby rotate depending on a rotation motion.

The first rotation member 110 and the second rotation member 120 may be formed to protrude from the body 10 toward the surface to be cleaned, for example, toward a bottom surface, and may be formed so that the first circular cleaner 210 and the second circular cleaner 220 may be fixed thereto.

The first circular cleaner 210 and the second circular cleaner 220 may be formed of various fiber materials such as cloth that may wipe the surface to be cleaned, such as superfine fiber cloth, dustcloth, non-woven fabric, brush, and the like, so as to remove foreign materials stuck to the bottom surface through a rotation motion.

In addition, the first circular cleaner 210 and the second circular cleaner 220 may be fixed to the first rotation member 110 and the second rotation member 120 by a method of covering the first rotation member 110 and the second rotation member 120 with the first circular cleaner 210 and the second circular cleaner 220 or a method of using separate fixing means. For example, the first circular cleaner 210 and the second circular cleaner 220 may be attached and fixed to the first rotation member 110 and the second rotation member 120 by Velcro tapes, or the like.

In the robot cleaner 100 according to an exemplary embodiment of the present invention as described above, the first circular cleaner 210 and the second circular cleaner 220 rotate by the rotation motion of the first rotation member 110 and the second rotation member 120, thereby making it possible to remove foreign materials, and the like, stuck to the bottom through friction between the surface to be cleaned and the first and second circular cleaners 210 and 220. In addition, when frictional forces between the surface to be cleaned and the first and second circular cleaners 210 and 220 are generated, the frictional forces may be used as a power source of movement of the robot cleaner 100.

In more detail, in the robot cleaner 100 according to an exemplary embodiment of the present invention, the first rotation member 110 and the second rotation member 120 rotate, such that frictional forces with the surface to be cleaned is generated, and a movement speed and direction of the robot cleaner 100 may be adjusted depending on a magnitude and a direction of the sum of the frictional forces.

Particularly, although not illustrated in the accompanying drawings, rotation axes of the respective shafts 151 and 152 coupled to a pair of rotation members 110 and 120 may be formed to be inclined toward the center of the body 10. Therefore, the pair of rotation members 110 and 120 may be formed to be upwardly inclined from an outer side of the body 10 toward the center of the body10. Therefore, in the case in which the pair of rotation members 110 and 120 rotate, relative frictional forces generated between the pair of rotation members 110 and 120 and the surface to be cleaned may be larger at the outer side of the body 10 than at the center of the body 10. Therefore, a movement speed and direction of the robot cleaner 100 may be controlled by the relative frictional forces generated by controlling the rotation of the pair of rotation members 110 and 120.

As described above, according to an exemplary embodiment of the present invention, a control is performed on movement speeds and directions of the rotation members 110 and 120 of the robot cleaner 100, thereby making it possible to perform effective dustcloth cleaning corresponding to a proceeding route and obstacle detection of the robot cleaner 100. Detailed control components will be described below.

Meanwhile, in an exemplary embodiment of the present invention, a sensor unit 130 may include a plurality of sensors provided at appropriate positions in order to detect front and rear obstacles. For example, the sensors 130a, 130b, 130c, and 130d may be provided on the side surfaces and the central surface of the body 10 in order to detect the obstacles. Particularly, the sensors 130a, 130b, 130c, and 130d may be provided in pairs at a front and a rear on the basis of a proceeding direction of the robot cleaner 100, and may be disposed at positions corresponding to the respective rotation members 110 and 120. According to an exemplary embodiment of the present invention, the robot cleaner 100 may detect the front obstacle based on information sensed in the sensor 130a and the sensor 130b or detect the rear obstacle based on information sensed in the sensor 130c and the sensor 130d, on the basis of the proceeding direction of the robot cleaner 100.

Here, according to an exemplary embodiment of the present invention, since the robot cleaner 100 has a figure-eight structure in which the pair of rotation members are connected to each other, the robot cleaner 100 requires many sensors in detecting the obstacles.

However, in an exemplary embodiment of the present invention, a rotation control of the first rotation member 110 and the second rotation member 120 allowing obstacle detection and avoidance to be performed by only the sensors 130a, 130b, 130c, and 130d of the sensor unit 130 of the robot cleaner 100 may be provided. Therefore, a problem that the robot cleaner 100 is caught and does not proceed by the obstacle at the time of being moved may be solved, and a manufacturing cost required for attaching the sensors may be reduced.

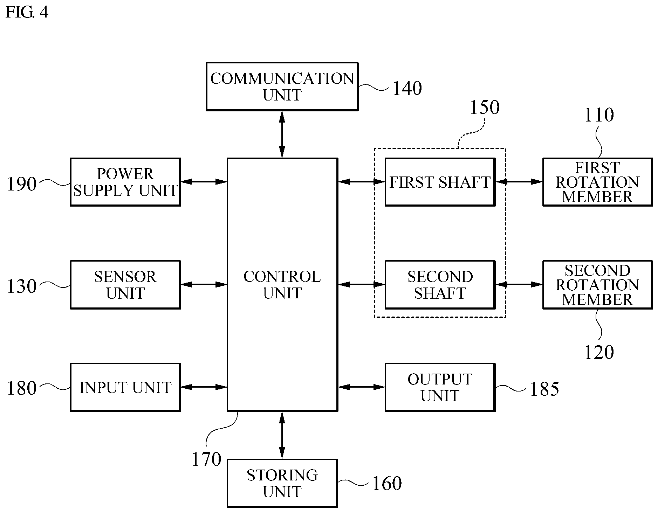

FIG. 4 is a block diagram illustrating components of a system for controlling a robot cleaner according to an exemplary embodiment of the present invention.

Referring to FIG. 4, the system for controlling a robot cleaner according to an exemplary embodiment of the present invention may be configured to include a sensor unit 130, a communication unit 140, a driving unit 150 for driving a first rotation member 110 and a second rotation member 120, a storing unit 160, a control unit 170, an input unit 180, an output unit 185, and a power supply unit 190.

The sensor unit 130 may include one or more sensors 130a, 130b, 130c, and 130d provided on the side surfaces and the central surface of the body 10 described above, and senses a surrounding state of the robot cleaner 100 to generate a sensing signal for controlling an operation of the robot cleaner 100. In addition, the sensor unit 130 may transfer the sensing signal detected depending on the surrounding state to the control unit 170. The sensor unit 130 may include an obstacle detecting sensor, a camera sensor, or the like, transmitting an infrared or ultrasonic signal to the outside and receiving a signal reflected from an obstacle.

The communication unit 140 may include one or more modules enabling wireless communication between the robot cleaner 100 and another wireless terminal or between the robot cleaner 100 and a network in which another wireless terminal is positioned. For example, the communication unit 140 may communicate with a wireless terminal, which is a remote controller. To this end, the communication unit 140 may include a near field communication module, a wireless Internet module, or the like.

An operation state, an operation scheme, or the like, the robot cleaner 100 may be controlled by a control signal received by the communication unit 140 as described above. An example of a terminal controlling the robot cleaner 100 may include a smart phone, a tablet, a personal computer, a remote controller, and the like, that may communicate with the robot cleaner 100.

The driving unit 150 generates control signals for rotating the first rotation member 110 and the second rotation member 120 depending on a control of the control unit 170. The driving unit 150 may include a first driver and a second driver. The first driver may generate a control signal for controlling rotation of the first shaft 151 coupled to the first rotation member 110, and the second driver may generate a control signal for controlling rotation of the second shaft 152 coupled to the second rotation member 120.

Meanwhile, the storing unit 160 may store a program for an operation of the control unit 170 therein, and temporarily store input/out data therein. The storing unit 160 may include at least one of a flash memory type storage medium, a hard disk type storage medium, a multimedia card micro type storage medium, a card type memory (for example, an SD or XD memory, or the like), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disk.

The input unit 180 generates input data for controlling an operation of the robot cleaner 100 by a user. The input unit 180 may be formed of a keypad, a dome switch, a touch pad (a resistive or capacitive touch pad), a jog wheel, a jog switch, or the like.

The output unit 185 is to generate an output related to a visual sense, an auditory sense, or the like. Although not illustrated, a display unit, a sound output module, an alarm unit, and the like, may be included in the output unit 185.

The control unit 170 usually controls a general operation of the robot cleaner 100. For example, the control unit 170 performs processes and controls related to cleaning time decision, cleaning route determination, traveling mode setting, obstacle avoidance, and the like.

Particularly, according to an exemplary embodiment of the present invention, the control unit 170 may control the robot cleaner 100 to be traveled in a specific proceeding direction by simultaneously or sequentially rotating the first rotation member 110 and the second rotation member 120 depending on a traveling mode.

In addition, the control unit 170 may decide whether or not an obstacle is detected from the signal sensed in the sensor unit 130 during a period in which traveling of the robot cleaner 100 is continued, and may rotate the first rotation member 110 and the second rotation member 120 in the same direction and at the same speed for a predetermined time when a time in which the obstacle is not detected exceeds a specific time or more.

When the first rotation member 110 and the second rotation member 120 rotate in the same direction and at the same speed due to the configuration as described above, the robot cleaner 100 may perform a rotation motion at the same place. The robot cleaner 100 may rotate at the same place depending on a rotation speed of the first rotation member 110 and the second rotation member 120.

Therefore, a direction in which a frictional force acts on the first rotation member of the robot cleaner 100 and a direction in which a frictional force acts on the second rotation member of the robot cleaner 100 are opposite to each other, such that the sum of the frictional forces may act as a torque for the robot cleaner 100.

In addition, the control unit 170 may arbitrarily adjust a rotation time in which the robot cleaner 100 rotates at the same place after the specific time, thereby changing a proceeding direction of the robot cleaner 100. Therefore, according to an exemplary embodiment of the present invention, even though the obstacle is not detected, in the case in which the time in which the obstacle is not detected exceeds the specific time or more, the robot cleaner 100 rotates at the same place to change a direction, thereby making it possible to escape from a case in which the robot cleaner 100 is caught and does not proceed by an obstacle that is not sensed. For example, the robot cleaner 100 according to an exemplary embodiment of the present invention may be in a state in which it does not move up a carpet, or the like, and is caught by the carpet, or the like. However, the rotation control as described above is performed, thereby making it possible to easily escape from the state described above without adding a separate sensor.

Meanwhile, in the case in which the obstacle is detected, the control unit 170 may control the rotation of the first rotation member and the second rotation member toward a direction for avoiding the obstacle depending on a position of the detected obstacle to perform a direction change, and may set a direction in which the obstacle is not detected to the proceeding direction.

In addition, the control unit 170 may include an advance mode setting unit selecting any one traveling mode of a first advance mode and a second advance mode.

The advance mode setting unit may select any one of the first advance mode and the second advance mode depending on speed setting of the robot cleaner or select any one of the first advance mode and the second advance mode depending on cleaning mode setting of the robot cleaner. The proceeding direction may be varied depending on a moving route determined by the control unit 170 or a moving route predetermined depending on a user input.

The control unit 170 may control at least one of the first rotation member and the second rotation member depending on the traveling mode selected as described above and the proceeding direction set as described above to travel the robot cleaner 100 in the first advance mode or the second advance mode specialized for the robot cleaner 100 and perform efficient cleaning.

In an exemplary embodiment of the present invention, in the case in which the first advance mode is selected, the control unit 170 may control the first rotation member 110 and the second rotation member 120 to rotate in different directions and at the same speed depending on the proceeding direction. In this case, a direction in which one end of the body 10 of the robot cleaner 100 moves by the frictional force between the first rotation member 110 and the surface to be cleaned may be the same as a direction in which the other end of the body 10 of the robot cleaner 100 moves by the frictional force between the second rotation member 120 and the surface to be cleaned. Therefore, in the case in which the first advance mode is selected, the control unit 170 may control the robot cleaner 100 to perform straight traveling in a specific direction.

Meanwhile, according to an exemplary embodiment of the present invention, in the case in which the second advance mode is selected, the control unit 170 may perform a control to sequentially and repeatedly perform a first step and a second step for a preset cleaning time, the first step being a step of controlling the first rotation member 110 to rotate at a constant first speed and in a second direction and controlling the second rotation member 120 to rotate at a second speed larger than the first speed and in the same direction as the second direction for a first time and the second step being a step of controlling the first rotation member 110 to rotate at the second speed and in a first direction different from the second direction and controlling the second rotation member 120 to rotate at the first speed and in the first direction when the first time elapses. Therefore, in the case in which the second advance mode is selected, the control unit 170 may control the robot cleaner to perform traveling while forming an S-shaped route in a specific direction. In this case, a movement speed may be slightly decreased as compared with the first advance mode, and obstacle detection performance and cleaning efficiency may be improved.

The power supply unit 190 receives external power or internal power by a control of the control unit 170 and supplies power required for operating the respective components.

Next, a method for controlling traveling of a robot cleaner 100 using the rotation control as described above will be described in more detail.

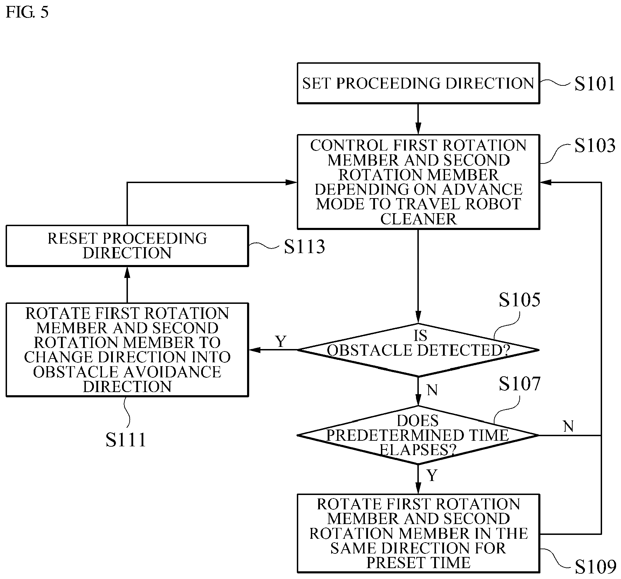

FIG. 5 is a flow chart illustrating a method for controlling a robot cleaner according to an exemplary embodiment of the present invention.

Referring to FIG. 5, the robot cleaner 100 sets a proceeding direction (S101), and controls the first rotation member 110 and the second rotation member 120 depending on an advance mode to start traveling (S103).

As described above, the control unit 170 may set the proceeding direction depending on a predetermined moving route, and select the advance mode to perform the traveling.

Then, the robot cleaner 100 decides whether or not an obstacle is detected (S105).

The control unit 170 may decide whether or not the obstacle is detected based on the sensing signals output from the plurality of sensors 130a, 130b, 130c, and 130d included in the sensor unit 130.

In addition, the control unit 170 may also decide whether or not the obstacle is detected using only sensing signals output from sensors corresponding to a proceeding direction of the robot cleaner 100 among the sensors of the sensor unit 130. For example, the control unit 170 may decide whether the obstacle is positioned in the proceeding direction based on sensing signals output from the sensor 130a and the sensor 130b positioned on one side surface on the basis of a relatively long side surface of the body 10.

In addition, in the case in which the obstacle is detected, the robot cleaner 100 controls the first rotation member 110 and the second rotation member 120 to change a direction of the robot cleaner into a direction in which it avoids the obstacle (Sill), resets the proceeding direction to the changed direction (S113), and again starts traveling controlling the first rotation member and the second rotation member depending on the advance mode (S103).

The control unit 170 may measure a direction in which the obstacle is positioned and a distance up to the obstacle on the basis of the proceeding direction based on the sensing signals output from the sensor unit 130.

In addition, as a rotation control scheme in which the control unit 170 changes the direction of the robot cleaner into the direction in which the robot cleaner avoids the obstacle, there may be several schemes. For example, the control unit 170 may control rotation directions and speeds of the first rotation member 110 and the second rotation member 120 to be the same as each other, thereby controlling the robot cleaner to rotate at the same place in a direction that becomes distant from a direction in which the obstacle is detected for a predetermined time.

In addition, in the case in which the direction in which the obstacle is detected is relatively close to a specific rotation member, for example, the first rotation member 110, the control unit 170 may control the first rotation member 110 to rotate in an opposite direction to a current direction for a predetermined time in a state in which the rotation of the second rotation member 120 is stopped, thereby controlling the robot cleaner to rotate in a direction that become distant from the obstacle.

Further, in the case in which the obstacle is detected in front of both of the first rotation member 110 and the second rotation member 120, the control unit 170 may rotate both of the first rotation member 110 and the second rotation member 120 in an opposite direction to a current direction, thereby changing the proceeding direction into the opposite direction.

Further, the control unit 170 may select a specific direction except for the direction in which the obstacle is detected, and reset the specific direction to the proceeding direction. In this case, the specific direction may be a random direction except for the direction in which the obstacle is detected depending on a result of the direction change or a direction determined depending on the predetermined moving route.

Meanwhile, in the case in which the obstacle is not detected, the robot cleaner 100 decides whether or not a predetermined time elapses (S107). In the case in which the predetermined time does not elapse, the robot cleaner 100 continuously performs the traveling depending on the advance mode (S103).

However, in the case in which the predetermined time elapses, the robot cleaner 100 rotates the first rotation member 110 and the second rotation member 120 in the same direction for a preset time (S109) .

As described above, the driving of the robot cleaner 100 depends on a torque of the rotation member, and a cleaner formed of cloth, such as dustcloth, or the like, may be attached to the rotation member. Therefore, in the case in which the robot cleaner 100 meets an obstacle having a height change of the surface to be cleaned or is traveled on a region in which a material of a bottom of the surface to be cleaned is changed, the robot cleaner 100 may be abnormally traveled. Therefore, in order to solve this problem, in the case in which the preset time or more elapses in a state in which the obstacle is not detected, the control unit 170 may control the rotation directions and speeds of the first rotation member 110 and the second rotation member 120 to be the same as each other, thereby controlling the robot cleaner to rotate at the same place.

The robot cleaner 100 according to an exemplary embodiment of the present invention rotates at the same place at a predetermined time period by the rotation control of the control unit 170 as described above, such that the robot cleaner 100 may more effectively detect the obstacle positioned in the vicinity of the robot cleaner 100 through the rotation and avoid the obstacle. In addition, in the case in which the robot cleaner 100 is caught at a specific position of the surface to be cleaned to be at a deadlock in which it is difficult to sense the obstacle, the robot cleaner 100 may escape from the deadlock through periodical rotation.

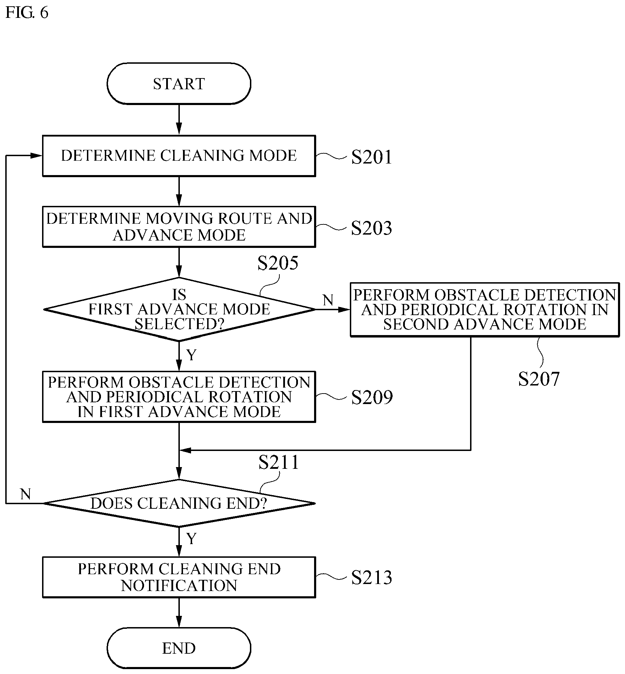

Next, a method for controlling a robot cleaner according to an exemplary embodiment of the present invention will be described on the basis of an operation in an advance mode with reference to FIGS. 6 to 10.

FIG. 6 is a flow chart illustrating a method for controlling a robot cleaner according to another exemplary embodiment of the present invention.

Referring to FIG. 6, the robot cleaner 100 determines a cleaning mode (S201), and determines a moving route and an advance mode depending on the determined cleaning mode (S203). The advance mode is an operation mode in which the robot cleaner 100 is traveled forward, and an advance pattern may be variously implemented. However, a case in which a first advance mode for general straight traveling and a second advance mode for sensing and cleaning efficiency improvement will be mainly described in an exemplary embodiment of the present invention.

The control unit 170 may determine the cleaning mode on the basis of a user control signal input through the input unit 180 or received through the communication unit 140.

In addition, the control unit 170 may determine the moving route depending on the determined cleaning mode, and determine the advance mode for traveling the robot cleaner along the moving route.

In more detail, in the case in which the advance mode is determined in advance by the cleaning mode, the control unit 170 may select the determined advance mode as a current advance mode. For example, in the case in which the cleaning mode is a high speed cleaning mode, the advance mode may be determined to be the first advance mode in which the robot cleaner is straightly traveled. In addition, in the case in which the cleaning mode is an efficient cleaning mode, the advance mode may be determined to be the second advance mode in which the first step and the second step described above are sequentially performed.

In addition, the control unit 170 may select the advance mode depending on a set speed for traveling the robot cleaner along the moving route. For example, in the case in which the set speed is a predetermined value or more, the first advance mode for rapid traveling may be selected, and in the case in which the set speed is less than the predetermined value, the second advance mode for efficient obstacle detection and cleaning may be determined.

In the case in which the first advance mode is selected (S205), the robot cleaner 100 performs obstacle detection and periodical rotation in the first advance mode (S209) . Otherwise, the robot cleaner 100 performs obstacle detection and periodical rotation in the second advance mode (S207).

As described above, the control unit 170 may perform obstacle detection and a periodical rotation control while traveling the robot cleaner in the selected advance mode. The control unit 170 performs the obstacle detection and the periodical rotation through the method illustrated in FIG. 5, thereby making it possible to improve sensing efficiency and an obstacle escape effect of the robot cleaner 100 using a torque and a frictional force of the rotation member.

Here, the first advance mode will be described below in more detail.

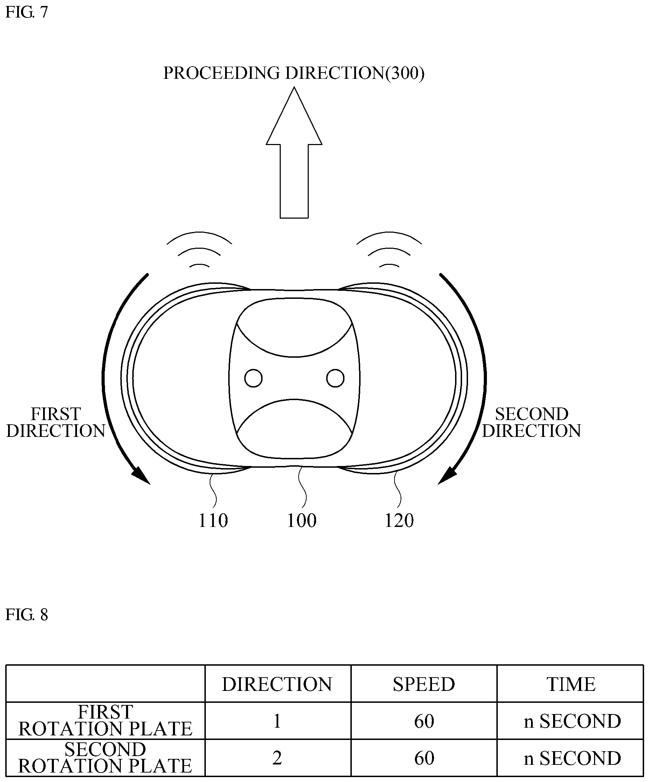

FIGS. 7 and 8 are views for describing a first advance mode of a robot cleaner according to an exemplary embodiment of the present invention.

A rotation direction of the rotation member according to an exemplary embodiment of the present invention will be described on the basis of a direction of the robot cleaner 100 viewed from the top. For example, the first direction may mean a direction in which the robot cleaner 100 rotates in a counterclockwise direction in a state in which the robot cleaner 100 is viewed from the top when a proceeding direction 300 is at the 12 o'clock position. In addition, the second direction, which is a direction different from the first direction, may mean a direction in which the robot cleaner rotates in a clockwise direction when a proceeding direction 300 is at the 12 o'clock position.

Therefore, referring to FIG. 7, in the case in which the advance mode is the first advance mode, the robot cleaner 100 according to an exemplary embodiment of the present invention may rotate the first rotation member 110 in the first direction and rotate the second rotation member 120 in the second direction different from the first direction, thereby generating a relative moving force depending on a frictional force and performing straight traveling in the preceding direction 200.

FIG. 8 represents a rotation control table for implementing the straight traveling in the first advance mode as described above. The control unit 170 may control the driving unit 150 based on rotation control table values stored in the storing unit 160 to perform the rotation control of the respective rotation members 110 and 120 depending on the advance mode. The rotation control table may include at least one of direction values, speed values, and time values allocated to the respective rotation members 110 and 120 for each moving mode. As illustrated in FIG. 8, in the first advance mode, a rotation direction of the first rotation member 110 and a rotation direction of the second rotation member 120 may be different from each other. In addition, rotations speeds and times of the respective rotation members 110 and 120 may have the same value. Therefore, the robot cleaner 100 may perform the straight traveling along the proceeding direction 300.

Meanwhile, the second advance mode will be described below in more detail.

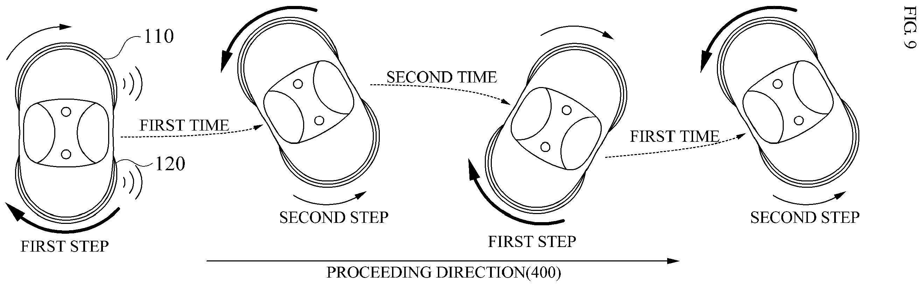

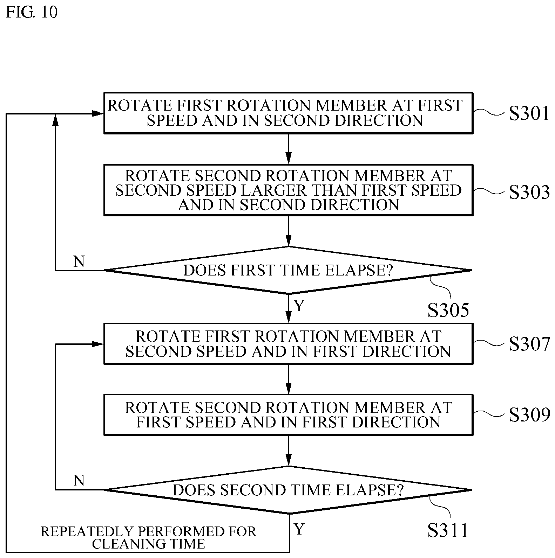

FIGS. 9 and 10 are views for describing a second advance mode of a robot cleaner according to an exemplary embodiment of the present invention.

Also in this case, a rotation direction of the rotation member according to an exemplary embodiment of the present invention will be described on the basis of a direction of the robot cleaner 100 viewed from the top. For example, the first direction may mean a direction in which the robot cleaner 100 rotates in a counterclockwise direction in a state in which the robot cleaner 100 is viewed from the top when a proceeding direction 400 is at the 12 o'clock position.

In addition, the second direction, which is a direction different from the first direction, may mean a direction in which the robot cleaner rotates in a clockwise direction when a proceeding direction 400 is at the 12 o'clock position.

Referring to FIGS. 9 and 10, in the case of the second advance mode of the robot cleaner 100 according to an exemplary embodiment of the present invention, the control unit 170 first rotates the first rotation member 100 at a first speed and in a second direction for a first time (S301) . At the same time, the control unit 170 rotates the second rotation member 120 at a second speed and in a second direction (S303) . Here, the second speed may be larger than the first speed. For example, in the case in which the second speed has a value of 60 on the basis of 100, the first speed may have a value of 7. Furthermore, according to an exemplary embodiment, the first speed may also be 0. That is, the robot cleaner may move by rotating only the second rotation member 120 in a state in the first rotation member 110 is fixed.

In addition, the robot cleaner 100 may move while being bent from the proceeding direction toward the second direction at a predetermined radius of curvature due to the difference in the rotation speed as described above. Here, the first time may be set to be short enough for the robot cleaner 100 not to deviate from a proceeding direction 400 by a predetermined range or more in order to prevent the robot cleaner 100 from deviating from a route.

Then, when the first time elapses (S305), the robot cleaner 100 controls the first rotation member 110 to rotate at the second speed and in the first direction (S307) and controls the second rotation member 120 to rotate at the first speed and in the first direction (S309), as opposed to the case described above. Then, when a second time elapses (S311), the robot cleaner 100 again repeatedly performs S301 and steps after S301. The first time and the second time may be the same as each other. Also in this case, the first speed may also be 0. That is, the robot cleaner 100 may move by rotating only the first rotation member 110 in a state in the second rotation member 120 is fixed.

The two steps as described above are sequentially and repeatedly performed for a preset cleaning time, such that the robot cleaner 100 efficiently performs dustcloth cleaning by a torque while reciprocating in an S shape on the basis of the proceeding direction 400.

Particularly, in the case of the second advance mode according to an exemplary embodiment of the present invention, the robot cleaner may alternatively perform a motion biased toward the left and a motion biased toward the right so that the side surfaces on which the sensors are provided go forward by a special motion, thereby improving sensing efficiency.

In addition, in the case of the first advance mode, a case in which foreign materials positioned between two rotation members 110 and 120 are not clearly wiped due to a straight motion may occur. However, in the second advance mode, the robot cleaner 100 may reciprocate in the S shape to more clearly perform cleaning in the proceeding direction.

Again, a description for FIG. 6 will be provided.

When the obstacle detection and the periodical rotation motion are performed depending on the advance mode described above, the robot cleaner 100 decides whether or not the cleaning ends (S211), and performs cleaning end notification (S213) when the cleaning ends.

The control unit 170 may perform the cleaning end notification through the output unit 185. The cleaning end notification may be implemented by an operation of an alarm unit using an audio or display output. In the case in which the cleaning does not end, the cleaning may be continuously performed from S201 depending on the cleaning mode.

As described above, the present invention may provide a robot cleaner including the pair of rotation members to which the dustcloth may be attached so as to effectively remove the foreign materials, or the like, stuck to the surface to be cleaned, that may improve battery efficiency using torques of the rotation members as a power source of movement and may perform the rotation control depending on the traveling mode for accomplishing effective dustcloth cleaning depending on the proceeding route and the obstacle detection, and a method for controlling the same.

Meanwhile, the method of controlling a robot cleaner according to various exemplary embodiments of the present invention described above may be implemented by program codes and be provided in the respective servers or apparatuses in a state in which it is stored in various non-transitory computer-readable media.

The non-transitory computer-readable medium is not a medium that stores data therein for a while, such as a register, a cache, a memory, or the like, but means a medium that semi-permanently stores data therein and is readable by a device. In detail, various applications or programs described above may be stored and provided in the non-transitory computer-readable medium such as a compact disk (CD), a digital versatile disk (DVD), a hard disk, a Blu-ray disk, a universal serial bus (USB), a memory card, a read only memory (ROM), or the like.

## Claims

1. A method for controlling a robot cleaner including a first rotation member (110)and a second rotation member (120) each rotating around a first shaft (151) and a second shaft (152) and having cleaners fixed thereto, comprising:
a step of controlling traveling of the robot cleaner by rotating the first rotation member (110) and the second rotation member (120) depending on a traveling mode;
a step of identifying whether or not an obstacle is detected during traveling of the robot cleaner; and
a step of rotating at least one of the first rotation member (110) and the second rotation member (120) depending on whether or not the obstacle is detected.

2. The method for controlling a robot cleaner of claim 1, further comprising a step of performing a direction change by controlling rotation of the first rotation member (110) and the second rotation member (120) for avoiding the obstacle depending on a position of the obstacle, in the case in which the obstacle is detected.

3. The method for controlling a robot cleaner of claim 1 or 2, wherein the step of controlling the traveling of the robot cleaner includes:
in the case in which a first advance mode is selected as the traveling mode of the robot cleaner,
a step of controlling the first rotation member (110) to rotate in a first direction depending on a proceeding direction and controlling the second rotation member to rotate in a second direction different from the first direction.

4. The method for controlling a robot cleaner of any one of claims 1 to 3, wherein the step of controlling the traveling of the robot cleaner includes:
in the case in which a second advance mode is selected as the traveling mode of the robot cleaner,
a first step of controlling the first rotation member (110) to rotate in the second direction and controlling the second rotation member (120) to rotate in the same direction as the second direction at a speed faster than that of the first rotation member (110) for a first time;
a second step of controlling the second rotation member to rotate in the first direction opposite to the second direction and controlling the first rotation member to rotate in the same direction as the first direction at a speed faster than that of the second rotation member for a second time when the first time elapses; and
a step of sequentially and repeatedly performing the first step and the second step.

5. The method for controlling a robot cleaner of claim 4, wherein in the step of controlling the traveling of the robot cleaner,
in the case in which the second advance mode is selected as the traveling mode of the robot cleaner,
in the first step, the first rotation member (110) is controlled to rotate at a first speed and the second rotation member (120) is controlled to rotate at a second speed larger than the first speed,
in the second step, the first rotation member (110) is controlled to rotate at the second speed and the second rotation member (120) is controlled to rotate at the first speed, and
the first step and the second step are sequentially and repeatedly performed for a preset cleaning time.

6. The method for controlling a robot cleaner of any one of claims 1 to 5, further comprising a step of selecting the traveling mode of the robot cleaner,
wherein the step of selecting the traveling mode of the robot cleaner includes a step of selecting any one of the first advance mode and the second advance mode depending on a set speed of the robot cleaner.

7. The method for controlling a robot cleaner of any one of claims 1 to 6, further comprising a step of selecting the traveling mode of the robot cleaner,
wherein the step of selecting the traveling mode of the robot cleaner includes a step of selecting any one of the first advance mode and the second advance mode depending on cleaning mode setting of the robot cleaner.

8. The method for controlling a robot cleaner of any one of claims 1 to 7, wherein a proceeding direction of the robot cleaner is varied depending on a moving route predetermined depending on a user input.

9. The method for controlling a robot cleaner of any one of claims 1 to 8, wherein in the case in which a time in which the obstacle is not detected exceeds a predetermined time or more, the first rotation member (110) and the second rotation member (120) rotate in the same direction.

10. A robot cleaner comprising:
a body unit (10);
a driving unit (150) provided in the body unit (10) and supplying power for traveling the robot cleaner;
a first rotation member (110) and a second rotation member (120) each rotating around a first shaft (151) and a second shaft (152) by the power of the driving unit (150) to provide a power source of movement for traveling the robot cleaner and each having cleaners fixed thereto; and
a control unit controlling traveling of the robot cleaner by rotating the first rotation member (110) and the second rotation member depending on a traveling mode of the robot cleaner, identifying whether or not an obstacle is detected during traveling of the robot cleaner, and controlling rotation of at least one of the first rotation member (110) and the second rotation member (120) depending on whether or not the obstacle is detected.

11. The robot cleaner of claim 10, wherein the control unit is configured to perform a direction change by controlling rotation of the first rotation member (110) and the second rotation member (120) for avoiding the obstacle depending on a position of the obstacle, in the case in which the obstacle is detected.

12. The robot cleaner of claim 10 or 11, wherein in the case in which a first advance mode is selected as the traveling mode of the robot cleaner,
the control unit is configured to control the first rotation member (110) to rotate in a first direction and controls the second rotation member (120) to rotate in a second direction different from the first direction.

13. The robot cleaner of any one of claims 10 to 12, wherein in the case in which a second advance mode is selected as the traveling mode of the robot cleaner, the control unit is configured to sequentially and repeatedly perform:
a first step of controlling the first rotation member (110) to rotate in the second direction and controlling the second rotation member (120) to rotate in the same direction as the second direction at a speed faster than that of the first rotation member for a first time, and
a second step of controlling the second rotation member (120) to rotate in the first direction opposite to the second direction and controlling the first rotation member (110) to rotate in the same direction as the first direction at a speed faster than that of the second rotation member for a second time when the first time elapses, and
the robot cleaner is traveled using frictional forces between a surface to be cleaned and each of cleaners for wet cleaning generated depending on a rotation motion of each of the cleaners as a power source of movement in the case in which the cleaners are fixed to the first rotation member (110) and the second rotation member.

14. The robot cleaner of any one of claims 10 to 13, wherein in the case in which the second advance mode is selected as the traveling mode of the robot cleaner, the control unit is configured
to control the first rotation member (110) to rotate at a first speed and controls the second rotation member to rotate at a second speed larger than the first speed, in the first step,
to control the first rotation member (110) to rotate at the second speed and controls the second rotation member to rotate at the first speed, in the second step, and
to sequentially and repeatedly perform the first step and the second step for a preset cleaning time.

15. The robot cleaner of any one of claims 10 to 14, further comprising an advance mode setting unit selecting the traveling mode of the robot cleaner,
wherein the advance mode setting unit selects any one of the first advance mode and the second advance mode depending on speed setting of the robot cleaner.

## Patentansprüche

1. Verfahren zur Steuerung eines robotischen Reinigers, umfassend ein erstes Drehelement (110) und ein zweites Drehelement (120), die sich jeweils um eine erste Welle (151) und eine zweite Welle (152) drehen und an ihnen befestigte Reiniger aufweisen, umfassend:
einen Schritt der Steuerung des Fahrens des robotischen Reinigers durch Drehen des ersten Drehelements (110) und des zweiten Drehelements (120) in Abhängigkeit von einem Fahrmodus;
einen Schritt des Identifizierens, ob während des Fahrens des robotischen Reinigers ein Hindernis erkannt wird oder nicht; und
einen Schritt des Drehens von mindestens einem des ersten Drehelements (110) und des zweiten Drehelements (120) in Abhängigkeit davon, ob das Hindernis erkannt wird oder nicht.

2. Verfahren zur Steuerung eines robotischen Reinigers nach Anspruch 1, ferner umfassend einen Schritt des Ausführens einer Richtungsänderung durch Steuerung des Drehens des ersten Drehelements (110) und des zweiten Drehelements (120) zum Vermeiden des Hindernisses in Abhängigkeit von einer Position des Hindernisses, in dem Fall, dass das Hindernis erkannt wurde.

3. Verfahren zur Steuerung eines robotischen Reinigers nach Anspruch 1 oder 2, wobei der Schritt der Steuerung des Fahrens des robotischen Reinigers Folgendes umfasst:
in dem Fall, dass ein erster Vorschubmodus als Fahrmodus des robotischen Reinigers ausgewählt ist,
einen Schritt der Steuerung des ersten Drehelements (110) zur Drehung in einer ersten Richtung in Abhängigkeit von einer Fortbewegungsrichtung und der Steuerung des zweiten Drehelements zur Drehung in einer zweiten Richtung, die sich von der ersten Richtung unterscheidet.

4. Verfahren zur Steuerung eines robotischen Reinigers nach einem der Ansprüche 1 bis 3, wobei der Schritt der Steuerung des Fahrens des robotischen Reinigers Folgendes umfasst:
in dem Fall, dass ein zweiter Vorschubmodus als Fahrmodus des robotischen Reinigers ausgewählt ist,
einen ersten Schritt der Steuerung des ersten Drehelements (110) zur Drehung in der zweiten Richtung und der Steuerung des zweiten Drehelements (120) zur Drehung in der gleichen Richtung wie die zweite Richtung mit einer höheren Geschwindigkeit als die des ersten Drehelements (110) für einen ersten Zeitraum;
einen zweiten Schritt der Steuerung des zweiten Drehelements zur Drehung in der ersten Richtung, die der zweiten Richtung entgegengesetzt ist, und der Steuerung des ersten Drehelements zur Drehung in der gleichen Richtung wie die erste Richtung mit einer höheren Geschwindigkeit als die des zweiten Drehelements für einen zweiten Zeitraum nach Ablauf des ersten Zeitraums; und
einen Schritt des sequenziellen und wiederholten Ausführens des ersten Schritts und des zweiten Schritts.

5. Verfahren zur Steuerung eines robotischen Reinigers nach Anspruch 4, wobei, in dem Schritt der Steuerung des Fahrens des robotischen Reinigers,
in dem Fall, dass der zweite Vorschubmodus als Fahrmodus des robotischen Reinigers ausgewählt ist,
in dem ersten Schritt das erste Drehelement (110) zur Drehung mit einer ersten Geschwindigkeit gesteuert wird und das zweite Drehelement (120) zur Drehung mit einer zweiten Geschwindigkeit, die höher als die erste Geschwindigkeit ist, gesteuert wird,
in dem zweiten Schritt das erste Drehelement (110) zur Drehung mit der zweiten Geschwindigkeit gesteuert wird und das zweite Drehelement (120) zur Drehung mit der ersten Geschwindigkeit gesteuert wird und
der erste Schritt und der zweite Schritt für einen vorgegebenen Reinigungszeitraum sequenziell und wiederholt ausgeführt werden.

6. Verfahren zur Steuerung eines robotischen Reinigers nach einem der Ansprüche 1 bis 5, ferner umfassend einen Schritt des Auswählens des Fahrmodus des robotischen Reinigers,
wobei der Schritt des Auswählens des Fahrmodus des robotischen Reinigers einen Schritt des Auswählens des ersten Vorschubmodus oder des zweiten Vorschubmodus in Abhängigkeit von einer eingestellten Geschwindigkeit des robotischen Reinigers umfasst.

7. Verfahren zur Steuerung eines robotischen Reinigers nach einem der Ansprüche 1 bis 6, ferner umfassend einen Schritt des Auswählens des Fahrmodus des robotischen Reinigers,
wobei der Schritt des Auswählens des Fahrmodus des robotischen Reinigers einen Schritt des Auswählens des ersten Vorschubmodus oder des zweiten Vorschubmodus in Abhängigkeit von einer Reinigungsmoduseinstellung des robotischen Reinigers umfasst.

8. Verfahren zur Steuerung eines robotischen Reinigers nach einem der Ansprüche 1 bis 7, wobei eine Fortbewegungsrichtung des robotischen Reinigers in Abhängigkeit von einer Bewegungsroute verändert wird, die in Abhängigkeit von einer Benutzereingabe vorbestimmt ist.

9. Verfahren zur Steuerung eines robotischen Reinigers nach einem der Ansprüche 1 bis 8, wobei, in dem Fall, dass ein Zeitraum, in dem das Hindernis nicht erkannt wird, einen vorbestimmten Zeitraum oder mehrere überschreitet, sich das erste Drehelement (110) und das zweite Drehelement (120) in der gleichen Richtung drehen.

10. Robotischer Reiniger, umfassend:
eine Körpereinheit (10);
eine Antriebseinheit (150), die in der Körpereinheit (10) bereitgestellt ist und Energie zum Fahren des robotischen Reinigers liefert;
ein erstes Drehelement (110) und ein zweites Drehelement (120), die sich durch die Energie der Antriebseinheit (150) jeweils um eine erste Welle (151) und eine zweite Welle (152) drehen, um eine Bewegungsenergiequelle zum Fahren des robotischen Reinigers bereitzustellen, und jeweils an ihnen befestigte Reiniger aufweisen; und
eine Steuereinheit zum Steuern des Fahrens des robotischen Reinigers durch Drehen des ersten Drehelements (110) und des zweiten Drehelements in Abhängigkeit von einem Fahrmodus des robotischen Reinigers, zum Identifizieren, ob während des Fahrens des robotischen Reinigers ein Hindernis erkannt wird oder nicht, und zum Steuern des Drehens von einem des ersten Drehelements (110) und des zweiten Drehelements (120) in Abhängigkeit davon, ob das Hindernis erkannt wird oder nicht.

11. Robotischer Reiniger nach Anspruch 10, wobei die Steuereinheit konfiguriert ist zum Ausführen einer Richtungsänderung durch Steuerung des Drehens des ersten Drehelements (110) und des zweiten Drehelements (120) zum Vermeiden des Hindernisses in Abhängigkeit von einer Position des Hindernisses, in dem Fall, dass das Hindernis erkannt wurde.

12. Robotischer Reiniger nach Anspruch 10 oder 11, wobei, in dem Fall, dass ein erster Vorschubmodus als Fahrmodus des robotischen Reinigers ausgewählt ist,
die Steuereinheit konfiguriert ist zum Steuern des ersten Drehelements (110) zur Drehung in einer ersten Richtung und zum Steuern des zweiten Drehelements (120) zur Drehung in einer zweiten Richtung, die sich von der ersten Richtung unterscheidet.

13. Robotischer Reiniger nach einem der Ansprüche 10 bis 12, wobei, in dem Fall, dass ein zweiter Vorschubmodus als Fahrmodus des robotischen Reinigers ausgewählt ist, die Steuereinheit konfiguriert ist zum sequenziellen und wiederholten Ausführen:
eines ersten Schritts der Steuerung des ersten Drehelements (110) zur Drehung in der zweiten Richtung und der Steuerung des zweiten Drehelements (120) zur Drehung in der gleichen Richtung wie die zweite Richtung mit einer höheren Geschwindigkeit als die des ersten Drehelements für einen ersten Zeitraum und
eines zweiten Schritts der Steuerung des zweiten Drehelements (120) zur Drehung in der ersten Richtung, die der zweiten Richtung entgegengesetzt ist, und der Steuerung des ersten Drehelements (110) zur Drehung in der gleichen Richtung wie die erste Richtung mit einer höheren Geschwindigkeit als die des zweiten Drehelements für einen zweiten Zeitraum nach Ablauf des ersten Zeitraums und
der robotische Reiniger unter Verwendung von Reibungskräften zwischen einer zu reinigenden Oberfläche und jedem der Reiniger zur Nassreinigung gefahren wird, die in Abhängigkeit von einer Drehbewegung jedes der Reiniger als Bewegungsenergiequelle erzeugt werden, in dem Fall, dass die Reiniger an dem ersten Drehelement (110) und dem zweiten Drehelement befestigt sind.

14. Robotischer Reiniger nach einem der Ansprüche 10 bis 13, wobei, in dem Fall, dass der zweite Vorschubmodus als Fahrmodus des robotischen Reinigers ausgewählt ist, die Steuereinheit konfiguriert ist
zum Steuern des ersten Drehelements (110) zur Drehung mit einer ersten Geschwindigkeit und zum Steuern des zweiten Drehelements zur Drehung mit einer zweiten Geschwindigkeit, die höher als die erste Geschwindigkeit ist, in dem ersten Schritt,
zum Steuern des ersten Drehelements (110) zur Drehung mit der zweiten Geschwindigkeit und zum Steuern des zweiten Drehelements zur Drehung mit der ersten Geschwindigkeit, in dem zweiten Schritt, und
zum sequenziellen und wiederholten Ausführen des ersten Schritts und des zweiten Schritts für einen vorgegebenen Reinigungszeitraum.

15. Robotischer Reiniger nach einem der Ansprüche 10 bis 14, ferner umfassend eine Vorschubmoduseinstelleinheit zum Auswählen des Fahrmodus des robotischen Reinigers,
wobei die Vorschubmoduseinstelleinheit den ersten Vorschubmodus oder den zweiten Vorschubmodus in Abhängigkeit von einer Geschwindigkeitseinstellung des robotischen Reinigers auswählt.

## Revendications

1. Procédé de commande d'un robot nettoyeur incluant un premier élément de rotation (110) et un deuxième élément de rotation (120) tournant chacun autour d'un premier arbre (151) et d'un deuxième arbre (152) et ayant des nettoyeurs fixés à ceux-ci, comprenant :
une étape de commande du déplacement du robot nettoyeur par rotation du premier élément de rotation (110) et du deuxième élément de rotation (120) en fonction d'un mode de déplacement ;
une étape d'identification de si un obstacle est détecté ou non pendant le déplacement du robot nettoyeur ; et
une étape de rotation d'au moins un parmi le premier élément de rotation (110) et le deuxième élément de rotation (120) en fonction de si l'obstacle est détecté ou non.

2. Procédé de commande d'un robot nettoyeur selon la revendication 1, comprenant en outre une étape de réalisation d'un changement de direction par commande de la rotation du premier élément de rotation (110) et du deuxième élément de rotation (120) pour éviter l'obstacle en fonction d'une position de l'obstacle, dans le cas où l'obstacle est détecté.

3. Procédé de commande d'un robot nettoyeur selon la revendication 1 ou 2, dans lequel l'étape de commande du déplacement du robot nettoyeur inclut :
dans le cas où un premier mode d'avance est sélectionné comme mode de déplacement du robot nettoyeur,
une étape de commande du premier élément de rotation (110) pour tourner dans une première direction en fonction d'une direction d'avancement et de commande du deuxième élément de rotation pour tourner dans une deuxième direction différente de la première direction.

4. Procédé de commande d'un robot nettoyeur selon l'une quelconque des revendications 1 à 3, dans lequel l'étape de commande du déplacement du robot nettoyeur inclut :
dans le cas où un deuxième mode d'avance est sélectionné comme mode de déplacement du robot nettoyeur,
une première étape de commande du premier élément de rotation (110) pour tourner dans la deuxième direction et de commande du deuxième élément de rotation (120) pour tourner dans la même direction que la deuxième direction à une vitesse plus rapide que celle du premier élément de rotation (110) pendant un premier temps ;
une deuxième étape de commande du deuxième élément de rotation pour tourner dans la première direction opposée à la deuxième direction et de commande du premier élément de rotation pour tourner dans la même direction que la première direction à une vitesse plus rapide que celle du deuxième élément de rotation pendant un deuxième temps lorsque le premier temps s'écoule ; et
une étape de réalisation séquentielle et répétée de la première étape et de la deuxième étape.

5. Procédé de commande d'un robot nettoyeur selon la revendication 4, dans lequel, dans l'étape de commande du déplacement du robot nettoyeur,
dans le cas où le deuxième mode d'avance est sélectionné comme mode de déplacement du robot nettoyeur,
dans la première étape, le premier élément de rotation (110) est commandé pour tourner à une première vitesse et le deuxième élément de rotation (120) est commandé pour tourner à une deuxième vitesse plus grande que la première vitesse,
dans la deuxième étape, le premier élément de rotation (110) est commandé pour tourner à la deuxième vitesse et le deuxième élément de rotation (120) est commandé pour tourner à la première vitesse, et
la première étape et la deuxième étape sont réalisées de manière séquentielle et répétée pendant un temps de nettoyage prédéfini.

6. Procédé de commande d'un robot nettoyeur selon l'une quelconque des revendications 1 à 5, comprenant en outre une étape de sélection du mode de déplacement du robot nettoyeur,
dans lequel l'étape de sélection du mode de déplacement du robot nettoyeur inclut une étape de sélection de l'un quelconque parmi le premier mode d'avance et le deuxième mode d'avance en fonction d'une vitesse définie du robot nettoyeur.

7. Procédé de commande d'un robot nettoyeur selon l'une quelconque des revendications 1 à 6, comprenant en outre une étape de sélection du mode de déplacement du robot nettoyeur,
dans lequel l'étape de sélection du mode de déplacement du robot nettoyeur inclut une étape de sélection de l'un quelconque parmi le premier mode d'avance et le deuxième mode d'avance en fonction du réglage du mode de nettoyage du robot nettoyeur.

8. Procédé de commande d'un robot nettoyeur selon l'une quelconque des revendications 1 à 7, dans lequel une direction d'avancement du robot nettoyeur est modifiée en fonction d'un itinéraire de mouvement prédéterminé en fonction d'une entrée utilisateur.

9. Procédé de commande d'un robot nettoyeur selon l'une quelconque des revendications 1 à 8, dans lequel, dans le cas où un temps pendant lequel l'obstacle n'est pas détecté dépasse un temps prédéterminé ou plus, le premier élément de rotation (110) et le deuxième élément de rotation (120) tournent dans la même direction.

10. Robot nettoyeur comprenant :
une unité de corps (10) ;
une unité d'entraînement (150) prévue dans l'unité de corps (10) et fournissant de l'énergie pour déplacer le robot nettoyeur ;
un premier élément de rotation (110) et un deuxième élément de rotation (120), chacun tournant autour d'un premier arbre (151) et d'un deuxième arbre (152) par l'énergie de l'unité d'entraînement (150) pour fournir une source d'énergie de mouvement pour déplacer le robot nettoyeur et chacun ayant des nettoyeurs fixés à ceux-ci ; et
une unité de commande commandant le déplacement du robot nettoyeur par rotation du premier élément de rotation (110) et du deuxième élément de rotation en fonction d'un mode de déplacement du robot nettoyeur, identifiant si un obstacle est détecté ou non pendant le déplacement du robot nettoyeur, et commandant la rotation d'au moins un parmi le premier élément de rotation (110) et le deuxième élément de rotation (120) en fonction de si l'obstacle est détecté ou non.

11. Robot nettoyeur selon la revendication 10, dans lequel l'unité de commande est configurée pour réaliser un changement de direction en commandant la rotation du premier élément de rotation (110) et du deuxième élément de rotation (120) pour éviter l'obstacle en fonction d'une position de l'obstacle, dans le cas où l'obstacle est détecté.

12. Robot nettoyeur selon la revendication 10 ou 11, dans lequel dans le cas où un premier mode d'avance est sélectionné comme mode de déplacement du robot nettoyeur,
l'unité de commande est configurée pour commander le premier élément de rotation (110) pour tourner dans une première direction et commande le deuxième élément de rotation (120) pour tourner dans une deuxième direction différente de la première direction.

13. Robot nettoyeur selon l'une quelconque des revendications 10 à 12, dans lequel, dans le cas où un deuxième mode d'avance est sélectionné comme mode de déplacement du robot nettoyeur, l'unité de commande est configurée pour réaliser de manière séquentielle et répétée :
une première étape de commande du premier élément de rotation (110) pour tourner dans la deuxième direction et de commande du deuxième élément de rotation (120) pour tourner dans la même direction que la deuxième direction à une vitesse plus rapide que celle du premier élément de rotation pendant un premier temps, et
une deuxième étape de commande du deuxième élément de rotation (120) pour tourner dans la première direction opposée à la deuxième direction et de commande du premier élément de rotation (110) pour tourner dans la même direction que la première direction à une vitesse plus rapide que celle du deuxième élément de rotation pendant un deuxième temps lorsque le premier temps s'écoule, et
le robot nettoyeur est déplacé en utilisant des forces de frottement entre une surface à nettoyer et chacun des nettoyeurs pour le nettoyage humide générées en fonction d'un mouvement de rotation de chacun des nettoyeurs comme source d'énergie de mouvement dans le cas où les nettoyeurs sont fixés au premier élément de rotation (110) et au deuxième élément de rotation.

14. Robot nettoyeur selon l'une quelconque des revendications 10 à 13, dans lequel, dans le cas où le deuxième mode d'avance est sélectionné comme mode de déplacement du robot nettoyeur, l'unité de commande est configurée
pour commander le premier élément de rotation (110) pour tourner à une première vitesse et commander le deuxième élément de rotation pour tourner à une deuxième vitesse plus grande que la première vitesse, dans la première étape,
pour commander le premier élément de rotation (110) pour tourner à la deuxième vitesse et commander le deuxième élément de rotation pour tourner à la première vitesse, dans la deuxième étape, et
pour réaliser de manière séquentielle et répétée la première étape et la deuxième étape pendant un temps de nettoyage prédéfini.

15. Robot nettoyeur selon l'une quelconque des revendications 10 à 14, comprenant en outre une unité de réglage du mode d'avance sélectionnant le mode de déplacement du robot nettoyeur,
dans lequel l'unité de réglage du mode d'avance sélectionne l'un quelconque parmi le premier mode d'avance et le deuxième mode d'avance en fonction du réglage de la vitesse du robot nettoyeur.
